# EUROPÄISCHE PATENTSCHRIFT

(11) **EP 0 766 856 B1**
(45) Veröffentlichungstag und Bekanntmachung des Hinweises auf die Patenterteilung: **27.06.2001**
(21) Anmeldenummer: 96909979.5
(22) Anmeldetag: 23.04.1996
(51) Int. Cl.: G06K 15/02

(54) **VERFAHREN ZUR MONTAGE VON DRUCKBÖGEN**
PRINTING SHEET LAYOUT PROCESS
PROCEDE DE MONTAGE DE FEUILLES POUR L'IMPRESSION

(30) Priorität: 24.04.1995 DE 19514293
(43) Veröffentlichungstag der Anmeldung: 09.04.1997
(73) Patentinhaber: Heidelberger Druckmaschinen Aktiengesellschaft, 69115 Heidelberg (DE)
(72) Erfinder: SÖKER, Wilfried, Helmut, D-63674 Altenstadt (DE); BADER, Joachim, Josef, Eugen, D-61184 Karben (DE)
(86) Internationale Anmeldenummer: DE9600707
(87) Internationale Veröffentlichungsnummer: WO9634359

(56) Entgegenhaltungen:
- EP-A- 0 557 008
- EP-A- 0 574 224
- EP-A- 0 590 600
- WO-A-95/07506
- WO-A-95/07507
- US-A- 5 125 072

## Beschreibung

Die Erfindung bezieht sich auf das Gebiet der elektronischen Reproduktionstechnik und betrifft ein Verfahren zur elektronischen Montage von Druckbögen in einem Rastergenerator aus mehreren Druckseiten, die als hochaufgelöste Contone-Map vorliegen.

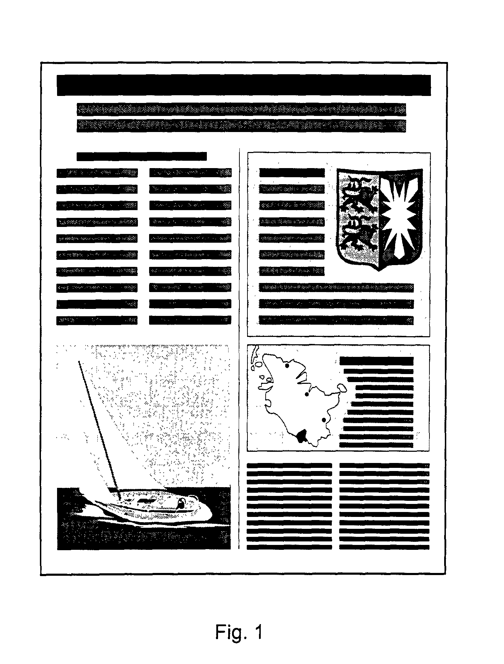

In der Reproduktionstechnik werden Druckvorlagen für Druckseiten erzeugt, die alle zu druckenden Elemente wie Texte, Grafiken und Bilder enthalten. Fig. 1 zeigt ein Beispiel für eine Druckseite. Für den farbigen Druck wird für jede Druckfarbe eine separate Druckvorlage erzeugt, die alle Elemente enthält, die in der jeweiligen Farbe gedruckt werden. Für den Vierfarbdruck sind das die Druckfarben Cyan, Magenta, Gelb und Schwarz (C, M, Y, K). Die nach Druckfarben separierten Druckvorlagen werden auch Farbauszüge genannt. Die Druckvorlagen werden in der Regel gerastert (Screening) und in hoher Auflösung auf Filme belichtet, die dann zur Herstellung der Druckformen (Druckplatten, Druckzylinder) weiter verarbeitet werden. Alternativ können die Druckvorlagen in speziellen Recordern auch direkt auf Druckplatten belichtet werden. Zum Prüfen des Inhalts und der Farben der Druckseiten werden Druckvorlagen in Proofrecordern mit einem Aufzeichnungsprozeß belichtet, der in einer farbigen Ausgabe den Druckprozeß simuliert.

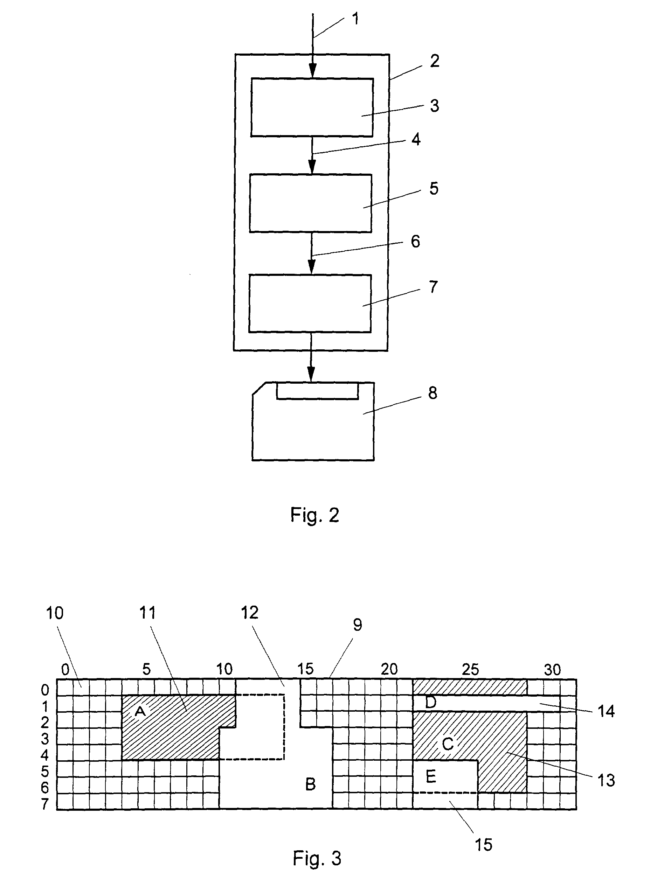

Der bisher nach dem Stand der Technik überwiegend verwendete Arbeitsablauf bei der Belichtung von Druckvorlagen für Druckseiten, die in der Seitenbeschreibungssprache PostScript erzeugt worden sind, ist in Fig. 2 gezeigt. PostScript-Daten (1) werden einem Raster-Image-Prozessor (RIP) (2) zugeführt, der ein speziell für diese Aufgabe optimierter Rechner sein kann oder ein Programm auf einem Standardrechner. Im Normalfall werden in einem Vorprozeß die separierten PostScript-Daten (1) für jeden Farbauszug einer Druckseite erzeugt und an den RIP (2) weitergegeben (separated PostScript). Alternativ kann eine farbige Druckseite auch in einem einzigen PostScript-Datenbestand erzeugt werden (composite PostScript). Im folgenden wird der Fall der separierten PostScript-Daten (1) weiter erläutert.

In einem ersten Schritt werden die PostScript-Daten (1) in einem Interpreter (3) analysiert und in eine Folge von einfachen grafischen Objekten zerlegt. Dazu wird die Druckvorlage in horizontale Streifen (Bänder) geteilt, die nacheinander bearbeitet werden. Fig. 3 zeigt einen Bandausschnitt (9) mit einigen vom Interpreter erzeugten Objekten. Der Bandausschnitt (9) ist in Aufzeichnungspixel (10) aufgeteilt. Im Beispiel von Fig. 3 ist der Bandausschnitt 8 Pixel hoch, numeriert von 0 bis 7, und 32 Pixel breit, numeriert von 0 bis 31. Die Auflösung kann symmetrisch sein (in horizontaler und vertikaler Richtung gleich), oder auch unsymmetrisch, z.B. horizontal doppelt so groß wie vertikal. Die Objekte A bis E (11,12, 13, 14, 15) beschreiben Teilsegmente von Text-, Grafik- oder Bildelementen, die in den Bandausschnitt (9) hineinfallen.

Die Objekte A bis E (11,12, 13, 14, 15) werden vom Interpreter in einem Datenformat ausgegeben, das als Display-Liste (4) (Fig. 2) bezeichnet wird. Das Datenformat beschreibt für jedes Objekt seine geometrische Form und mit welchem Grauwert es gefüllt ist. In der Display-Liste (4) erscheinen die Objekte A bis E (11,12, 13, 14, 15) nacheinander in der Reihenfolge, in der die zugehörigen Seitenelemente in den PostScript-Daten beschrieben sind. Dabei können Objekte, die in der Display-Liste (4) später erscheinen, Objekte, die früher in der Display-Liste (4) erschienen sind, teilweise oder ganz überdecken. Im Beispiel von Fig. 3 wird das Objekt A (11) teilweise vom Objekt B (12) überdeckt. Ebenso überdecken die Objekte D (14) und E (15) das Objekt C (13).

Im RIP (2) wird die Display-Liste (4) in einem weiteren Schritt einem Rastergenerator (5) zugeführt, der die Objekte der Display-Liste (4) nacheinander in mit Rasterpunkten gefüllte Flächen umsetzt und als Bitmap-Daten (6) in einen Bitmap-Speicher (7) schreibt. Die Rasterpunktgröße wird dabei je nach dem Grauwert des Objekts in der Display-Liste (4) variiert. Die Bitmap-Daten (6) von Objekten, die später in der Display-Liste (4) erscheinen, überschreiben jeweils die entsprechenden Bereiche des Bitmap-Speichers (7). Nachdem alle Objekte eines Bandes vom Rastergenerator (5) gerastert und in den Bitmap-Speicher (7) geschrieben wurden, wird der Inhalt des Bitmap-Speichers (7) als Steuersignalwerte an den Recorder (8) weitergeleitet und dort belichtet.

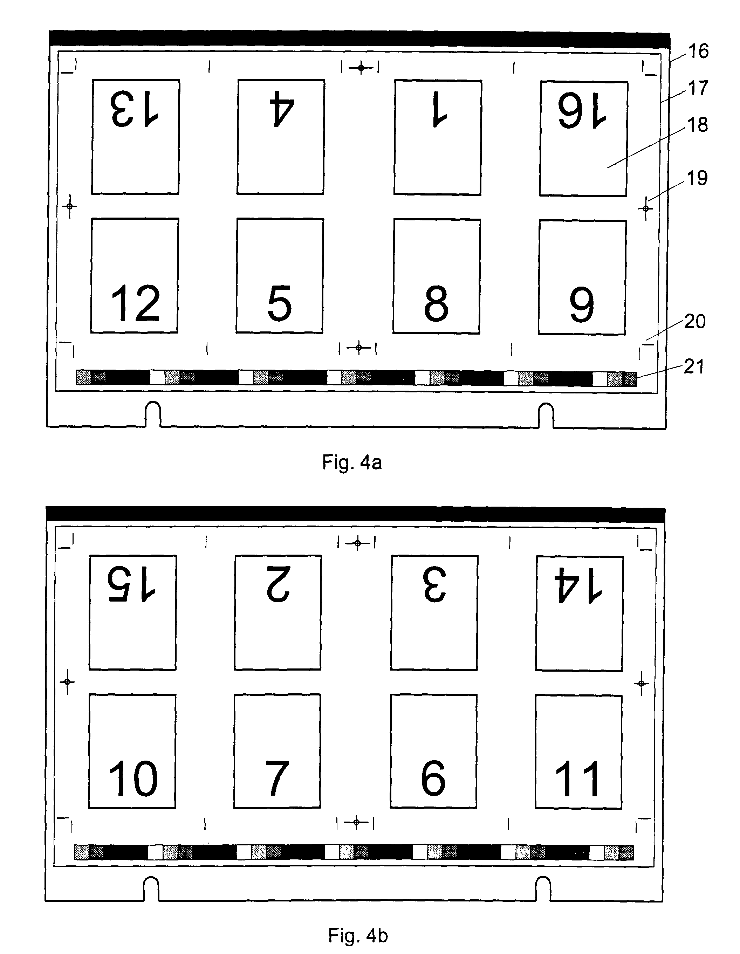

In der Regel wird mit einer Druckplatte nicht nur eine Druckseite gedruckt, sondern mehrere auf einmal, die so angeordnet sind, daß die Fläche der Druckplatte gut ausgenutzt wird und daß die Druckseiten nach dem Falzen und Schneiden des bedruckten Papierbogens eine Broschüre, ein Faltblatt oder ähnliches ergeben. Dazu werden die Druckseiten, die im gleichen Druckvorgang auf den Papierbogen gedruckt werden sollen, in einem Druckbogen zusammengefaßt. Die Anordnung der Druckseiten auf einem Druckbogen wird als Ausschießschema bezeichnet. Fig. 4a und 4b zeigen als Beispiel die Ausschießschemata für eine Broschüre mit 16 Druckseiten. In Fig. 4a ist eine Druckplatte (16) gezeigt, auf der ein Druckbogen (17) angeordnet ist. Der Druckbogen (17) faßt alle zu druckenden Elemente zusammen, d.h. die Druckseiten (18) und Hilfselemente wie Registermarken (19), Falz- und Schneidmarken (20) und Druckkontrollstreifen (21). Diese Hilfselemente dienen zur Qualitätskontrolle während des Druckens und zur Vereinfachung der Weiterverarbeitung (Falzen, Schneiden, Binden). Die Zahlen in den Druckseiten (18) kennzeichnen in dem Ausschießschema, an welcher Stelle des Druckbogens welche Seite der Broschüre gedruckt wird. Zahlen, die auf dem Kopf stehen, kennzeichnen Seiten, die auf dem Kopf gedruckt werden. In Fig. 4a ist das Schema gezeigt, das auf die Vorderseite des Papierbogens gedruckt wird (Schöndruck) und in Fig. 4b das Schema, das auf die Rückseite desselben Papierbogens gedruckt wird (Widerdruck). Mit den Ausschießschemata von Fig. 4a und Fig. 4b sind die Seiten nach dem Bedrucken beider Seiten des Papierbogens und nach dem Falzen und Schneiden fortlaufend in der Broschüre angeordnet.

Nach dem Stand der Technik gibt es zwei wesentliche Verfahren zur Montage von Seiten zu einem Druckbogen, die als PostScript-Daten vorliegen, die manuelle Montage und die elektronische Montage der PostScript-Daten. Bei der manuellen Montage werden zunächst die PostScript-Daten aller Seiten in einem RIP interpretiert und die Farbauszugsfilme der Seiten auf einem Recorder belichtet, wie es in Fig. 2 gezeigt ist. In dem Beispiel der Broschüre mit 16 Seiten entstehen so 64 Farbauszugsfilme (16 Seiten × 4 Druckfarben). Zum Drucken werden 8 Druckplatten mit je 8 Seiten benötigt (je 4 Druckfarben für den Schöndruck und den Widerdruck). Bei der manuellen Montage der 8 Druckbögen müssen je Druckbogen 8 Farbauszugsfilme der Seiten nach der Anordnung des Ausschießschemas auf eine transparente Folie von der Größe des Druckbogens geklebt werden, z.B. die Cyan-Filme der Seiten 1, 4, 5, 8, 9, 12, 13, 16 nach dem Ausschießschema von Fig. 4a. Ebenso werden die Filme der anderen Druckfarben nach dem gleichen Schema jeweils auf eine große Montagefolie geklebt. Für die Farbauszugsfilme der Seiten 2, 3, 6, 7, 10, 11, 14, 15 wird entsprechend verfahren, jedoch nach dem Ausschießschema von Fig. 4b. Mit den montierten Folien werden dann in einem fotografischen Prozeß die Druckplatten durch Kontaktbelichtung hergestellt. Die manuelle Montagearbeit muß sehr sorgfältig und genau ausgeführt werden, da die Druckbögen der einzelnen Druckfarben deckungsgleich sein müssen, damit im Druckergebnis an Bild- oder Schriftkanten keine Farbsäume auftreten und die Schärfe der gedruckten Bilder nicht beeinträchtigt wird . Es ist offensichtlich, daß die manuelle Montage der Druckbögen sehr arbeitsintensiv, zeitraubend und auch fehleranfällig ist.

Als elektronisches Montageverfahren für Druckbögen ist nach dem Stand der Technik die Erzeugung einer PostScript-Beschreibung des ganzen Druckbogens gebräuchlich. Dazu werden in einem Vorprozeß auf einem Rechner (Server) die PostScript-Daten aller Seiten gesammelt und, wenn sie vollständig vorhanden sind, zusammen mit PostScript-Daten für die Registermarken, Falz/Schneidmarken und Druckkontrollstreifen zu einem umfangreichen File von PostScript-Daten für den ganzen Druckbogen verknüpft. Üblicherweise wird für jede Druckfarbe und Papierbogenseite jeweils ein PostScript-File erzeugt. In dem Beispiel der 16-seitigen Broschüre entstehen so 8 PostScript-Files für die 8 Druckbögen (je 4 Druckfarben für den Schöndruck und den Widerdruck). Diese PostScript-Files werden dann im RIP interpretiert, gerastert und in einem großformatigen Recorder auf Filme von der Größe der Druckbögen oder direkt auf Druckplatten belichtet.

Es ist auch üblich, beide Verfahren zu vermischen, z.B. die PostScript-Montage von jeweils der Hälfte eines Druckbogens und die manuelle Montage der beiden Hälften zu einem ganzen Druckbogen. Dadurch wird einerseits kein (teurer) Recorder mit sehr großem Belichtungsformat benötigt, andererseits wird aber die manuelle Montagearbeit sehr stark vereinfacht.

Auch die PostScript-Montage der Druckbögen hat Nachteile. Zum einen können die PostScript-Daten für einen Druckbogen sehr umfangreich und komplex werden, so daß im RIP für die Interpretation ein sehr leistungsfähiger und somit teurer Rechner benötigt wird. Da die einzelnen Druckseiten oft von Anwendungsprogrammen verschiedener Hersteller erzeugt werden (Textverarbeitungs-, Grafikdesign-, Bildverarbeitungsprogramme) kann es vorkommen, daß die PostScript-Daten einiger Seiten vom Interpreter im RIP nicht richtig verarbeitet werden können oder der RIP sogar während der Belichtung steckenbleibt. Das ist dann der Fall, wenn die Hersteller der Anwendungsprogramme die Regeln der PostScript-Seitenbeschreibungssprache nicht genau eingehalten haben. Bei der Druckbogenbelichtung ist das kritischer als bei der Belichtung einzelner Seiten, da die Druckbogenbelichtung erst gestartet werden kann, wenn alle Seiten fertiggestellt sind. Das geschieht aber oft erst kurz vor dem Druckbeginn, so daß keine Zeit mehr bleibt, nach dem Fehler zu suchen.

Grundsätzlich gäbe es auch die Möglichkeit, die einzelnen Seiten durch den RIP interpretieren und rastern zu lassen und die dabei erzeugten Bitmap-Daten nicht gleich an den Recorder zur Belichtung weiterzugeben sondern z.B. auf einem Plattenspeicher zwischenzuspeichern. Die Bitmap-Daten aller Seiten könnten dann in einem Rechner (Server) nach dem Ausschießschema zu einem Bitmap-Datenbestand für den ganzen Druckbogen verknüpft und anschließend belichtet werden. Ein solches System ist in der Offenlegungsschrift DE 40 26 321 A1 beschrieben, wobei Bilder gerastert werden und als komprimierte Bitmap-Daten abgespeichert werden. Für höhere Belichtungsauflösungen, wie sie für die Aufzeichnung von Druckvorlagen erforderlich sind, ist diese Lösung jedoch nicht praktikabel, da der Speicher für die Druckbogen-Bitmap sehr groß und teuer wird. Für eine Druckplatte der Größe 70 cm × 100 cm und eine Auflösung von horizontal 2666 Pixel/cm (6772 dpi; dpi = dots per inch) und von vertikal 1333 Linien/cm (3383 dpi) ergibt sich ein Speicherbedarf von 3109 MByte je Druckbogen. Für die 8 Druckbögen der 16-seitigen Broschüre wird dann ein Speicherplatz von 24876 MByte benötigt. Festplatten scheiden außerdem als Speichermedium aus, da die Bitmap-Daten von ihnen nicht mit der erforderlichen Recorder-Datenrate von 100 bis 200 Mbit/s ausgelesen werden können.

Wegen des hohen Speicherbedarfs für die fertige Bitmap eines Druckbogens kann bei der bisherigen Arbeitsweise für die Montage von PostScript-Daten die Bitmap eines Druckbogens nicht zwischengespeichert werden. Wenn derselbe Druckbogen noch einmal belichtet werden soll, z.B. weil der zuerst belichtete Film oder die Druckplatte beschädigt wurde, muß daher der gesamte Verarbeitungsprozeß von der Interpretation der PostScript-Daten bis zur Belichtung noch einmal durchlaufen werden. Dies kostet zusätzliche Zeit und belegt den RIP, der in dieser Zeit schon einen neue Druckbogen bearbeiten könnte. Aus dem gleichen Grund erfordert die zusätzliche Belichtung der Druckbogens auf einem Proof-Ausgabegerät bei der bisherigen Arbeitsweise noch einmal den gesamten Durchlauf der PostScript-Daten durch den RIP und kostet daher unnötig Zeit. Dies ist ein weiterer Nachteil der Montage von PostScript-Daten nach dem Stand der Technik.

Es ist daher die Aufgabe der vorliegenden Erfindung, die zuvor genannten Nachteile zu vermeiden und ein Verfahren anzugeben, mit dem komprimierte und überlagerungsfreie Contone-Maps (Delta-Listen) der Druckseiten mit geringem Speicheraufwand generiert werden und während der Rasterung und Belichtung mit hoher Geschwindigkeit dekomprimiert und zu einem Druckbogen montiert werden.

Dies ermöglicht die kostengünstige Zwischenspeicherung der Druckseiten und die Belichtung von Druckbogen-Filmen und Proofausgaben von den gespeicherten Contone-Maps, ohne die PostScript-Daten jedesmal neu interpretieren zu müssen.

Die Komprimierung der Contone-Maps ermöglicht die Umsetzung in gerasterte Bitmap-Daten mit hoher Geschwindigkeit und ohne Zwischenspeicherung des ganzen Druckbogens und die Belichtung ohne Start/Stop-Betrieb des Recorders.

Diese Aufgabe wird durch die Verwendung eines neuen Datenformates für Contone-Maps gelöst, das auch als Delta-Liste bezeichnet wird. Die PostScript-Seitenbeschreibungen der einzelnen Druckseiten werden zunächst durch einen Interpreter in Contone-Maps umgewandelt und anschließend während der Rasterung und Belichtung zeilenweise zu einer Gesamt-Contone-Map des Druckbogens zusammengesetzt.

Die Erfindung wird nachfolgend anhand der Figuren 1 bis 7 näher beschrieben.

### Es zeigen:

- Fig. 1: ein Beispiel für eine Druckseite mit Text-, Grafik- und Bildelementen (Stand der Technik),
- Fig. 2: den Arbeitsablauf bei der Belichtung von PostScript-Daten nach dem Stand der Technik,
- Fig. 3: einen Ausschnitt aus einem Band mit Objekten, die der Interpreter erzeugt (Stand der Technik),
- Fig. 4: ein Beispiel für Ausschießschemata einer 16-seitigen Broschüre (Stand der Technik),
- Fig. 5: den Arbeitsablauf bei der Belichtung von PostScript-Daten mit der Erzeugung und Weiterverarbeitung der Delta-Liste,
- Fig. 6: die Unterteilung einer Druckvorlage in Bänder und Zonen,
- Fig. 7: die Montage von Delta-Listen zu einem Druckbogen.

### Allgemeines

In der deutschen Patentanmeldung der Anmelderin "Verfahren zur Generierung einer Contone-Map", Aktenzeichen 195 13 105.3 (veröffentlicht am 10.10.1996 als WO-A-9 631 837), wird die Erzeugung einer Contone-Map (Delta-Liste) ausführlich beschrieben. An dieser Stelle wird dies deshalb nur soweit erläutert, wie es für das Verständnis des erfindungsgemäßen Verfahrens zur Montage eines Druckbogens auf der Basis von Contone-Maps (Delta-Listen) der einzelnen Druckseiten erforderlich ist.

Eine Contone-Map beschreibt eine zu reproduzierende Druckvorlage in Form von Grauwerten, in der jedem Pixel ein Grauwert zugeordnet ist. Die Contone-Map wird aus den Seitenbeschreibungsdaten (PostScript-Daten) der zu reproduzierenden Druckseite erzeugt. Die Grauwerte der Contone-Map können direkt zur Ansteuerung des Recorders verwendet werden, wenn der Aufzeichnungsprozeß kontinuierliche Tonwerte wiedergeben kann, wie z.B. ein Proof-Ausgabegerät. Für Aufzeichnungsprozesse, die nur zwei Tonwerte wiedergeben können (weiß bzw. schwarz), werden die Grauwerte in einem Rastergenerator, der dem Recorder vorgeschaltet ist, vor der Aufzeichnung in Rasterpunkte umgesetzt, mit denen die Grauwerte für das Auge simuliert werden. Im Recorder werden die Druckvorlagen durch mindestens einen Belichtungsstrahl pixel- und zeilenweise auf das Aufzeichnungsmaterial belichtet. Während der Belichtung bestimmen die Steuersignalwerte, welche Pixel als Teile der Rasterpunkte belichtet oder nicht belichtet werden, indem die Steuersignalwerte den Belichtungsstrahl entsprechend ein- und ausschalten.

Für die Aufbereitung der Delta-Liste werden die Überlagerungen der Objekte in der Display-Liste (Fig. 3) geeignet eliminiert und anschließend die Daten möglichst hoch komprimiert. Die Delta-Liste ist überlagerungsfrei, weil sie nur Objekte enthält, die aneinandergrenzen und sich nicht überlappen. Für jedes Pixel gibt es in der Delta-Liste nur einen Grauwert. Bei der Wahl des Komprimierungs-Verfahrens muß ein Kompromiß zwischen einem hohen Kompressionsfaktor, einer schnellen Komprimierung und vor allem einer sehr schnellen Dekomprimierung gefunden werden.

In der Delta-Liste sind im wesentlichen einfache grafische Objekte und Raster-Informationen enthalten, die durch einen Rastergenerator schritthaltend mit der Recorder-Geschwindigkeit in Bitmap-Daten umgesetzt und ausgegeben werden können.

Die Erzeugung der Delta-Liste und die Rasterung können mit unterschiedlichen Auflösungen durchgeführt werden. Eine vorteilhafte Variante ist die Berechnung der Objekte in der Delta-Liste mit 666,5 Pixel/cm (1693 dpi) und die Rasterung der Grauwerte mit 1333 Pixel/cm (3386 dpi). Die Rasterung kann auch unsymmetrisch erfolgen, beispielsweise mit 2666 Pixel/cm (6772 dpi) in Zeilenrichtung und 1333 Pixel/cm (3386 dpi) senkrecht zur Zeilenrichtung.

Das Datenformat der Delta-Liste ist Byte-orientiert. Jedes Byte ist ein Befehl, dem in manchen Fällen Datenbytes nachfolgen. Die Codierung der Befehle ist derart gewählt, daß eine möglichst hohe Kompression der Daten erreicht wird. Am Anfang jeder Delta-Liste befinden sich allgemeine Informationen, z.B. die Länge der Delta-Liste und die Länge einer Scanlinie. Außerdem enthält die Delta-Liste Informationen über das Rasterverfahren (Screening), nach dem die Objekte vom Rastergenerator in Bitmaps umgesetzt werden sollen.

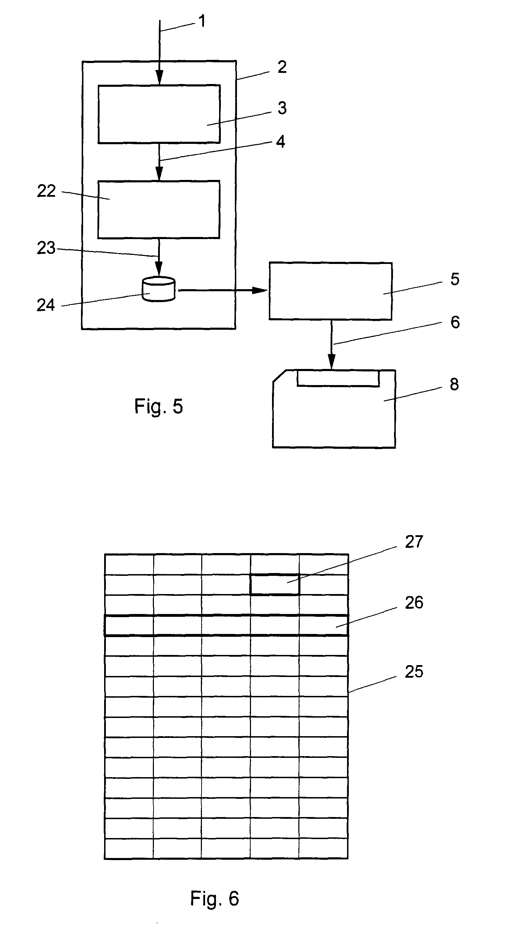

Fig. 5 zeigt einen verbesserten Arbeitsablauf für die Interpretation und Belichtung von PostScript-Daten, bei dem eine Contone-Map im Datenformat der Delta-Liste erzeugt wird. Die PostScript-Daten (1), die den Inhalt der Druckvorlage beschreiben, werden dem RIP (2) zugeführt, wo sie in einem ersten Schritt vom Interpreter (3) analysiert und in eine Display-Liste (4) umgewandelt werden, wie es zuvor bereits erläutert wurde. In einem zweiten Schritt wird aus der Display-Liste von einem Delta-Listen Generator (22) die überlagerungsfreie Contone-Map der Delta-Liste (23) erzeugt und z.B. auf einem Plattenspeicher (24) gespeichert. Wenn einzelne Druckseiten belichtet werden sollen, werden die gespeicherten Delta-Listen der Druckvorlagen, z.B. die verschiedenen Farbauszüge einer Druckseite, zu einem späteren Zeitpunkt nacheinander vom Plattenspeicher (24) abgerufen, vom Rastergenerator (5) in Bitmaps (6) umgewandelt und im Recorder (8) belichtet. Die Rasterung der Delta-Liste geschieht schritthaltend mit der Recorder-geschwindigkeit.

Da in verschiedenen Teilen einer Druckseite sehr unterschiedliche Seiteninhalte mit verschiedenen Eigenschaften bezüglich der Komprimierung vorkommen können, wird die Druckseite bei der Generierung der Delta-Liste in horizontale Streifen (Bänder) und diese weiter in aufeinanderfolgende Abschnitte (Zonen) unterteilt. In den Bändern und Zonen können dann jeweils optimierte Komprimierungsverfahren angewendet werden.

Fig. 6 zeigt die Einteilung einer Druckvorlage (25) in Bänder (26) und Zonen (27). Die Höhe der Bänder und die Breite der Zonen ist beliebig, jedoch ist es für die Verarbeitung vorteilhaft, wenn die Bänder alle gleich hoch und die Zonen alle gleich breit sind. Femer ist es vorteilhaft, wenn die Bandhöhe und die Zonenbreite Potenzen von 2 sind.

Da oft große Teile der Information auf einer Druckseite aus wenigen unterschiedlichen Grauwerten bestehen, z.B. nur aus Schwarz/Weiß-Information (Text), werden Grauwerte in der Delta-Liste mit verschiedener Bitzahl codiert, z.B. 1 Bit/-Grauwert für Schwarz/Weiß-Information und 8 Bit je Grauwert für Contone-Information. Diese Maßnahme trägt ebenfalls zur Komprimierung der Delta-Liste bei.

Die Komprimierung der Daten im Datenformat der Delta-Liste basiert auf dem Runlength-Verfahren, das für die speziellen Anforderungen modifiziert wird. Im Datenstrom existieren Kommando-Bytes, die von einer Lauflänge und/oder einem oder mehreren Grauwerten begleitet sein können. Die Komprimierung berücksichtigt auch Wiederholungen des ganzen Inhalts einer Zone in Y-Richtung (X-Richtung = Haupt-Scanrichtung; Y-Richtung = Neben-Scanrichtung). In der folgenden Tabelle werden beispielhaft einige Delta-Listen Kommandos und ihre Codierung erläutert, die zum Verständnis der Erzeugung der Delta-Liste wichtig sind.

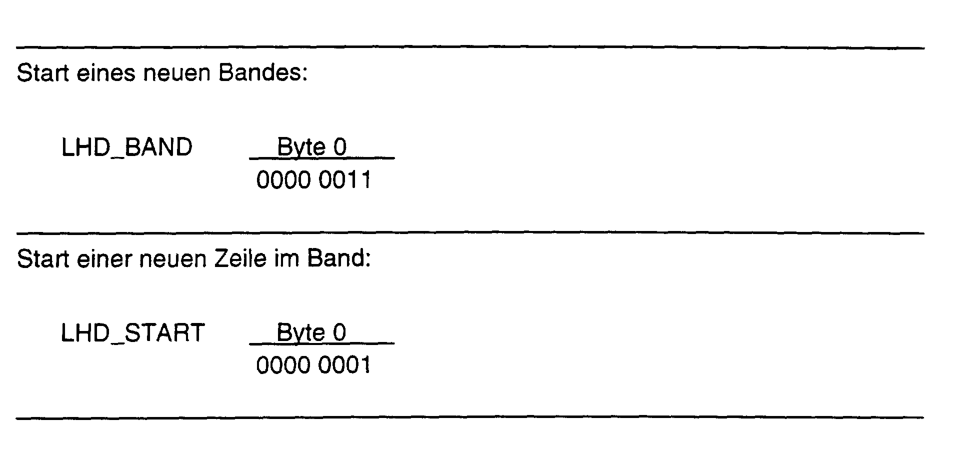

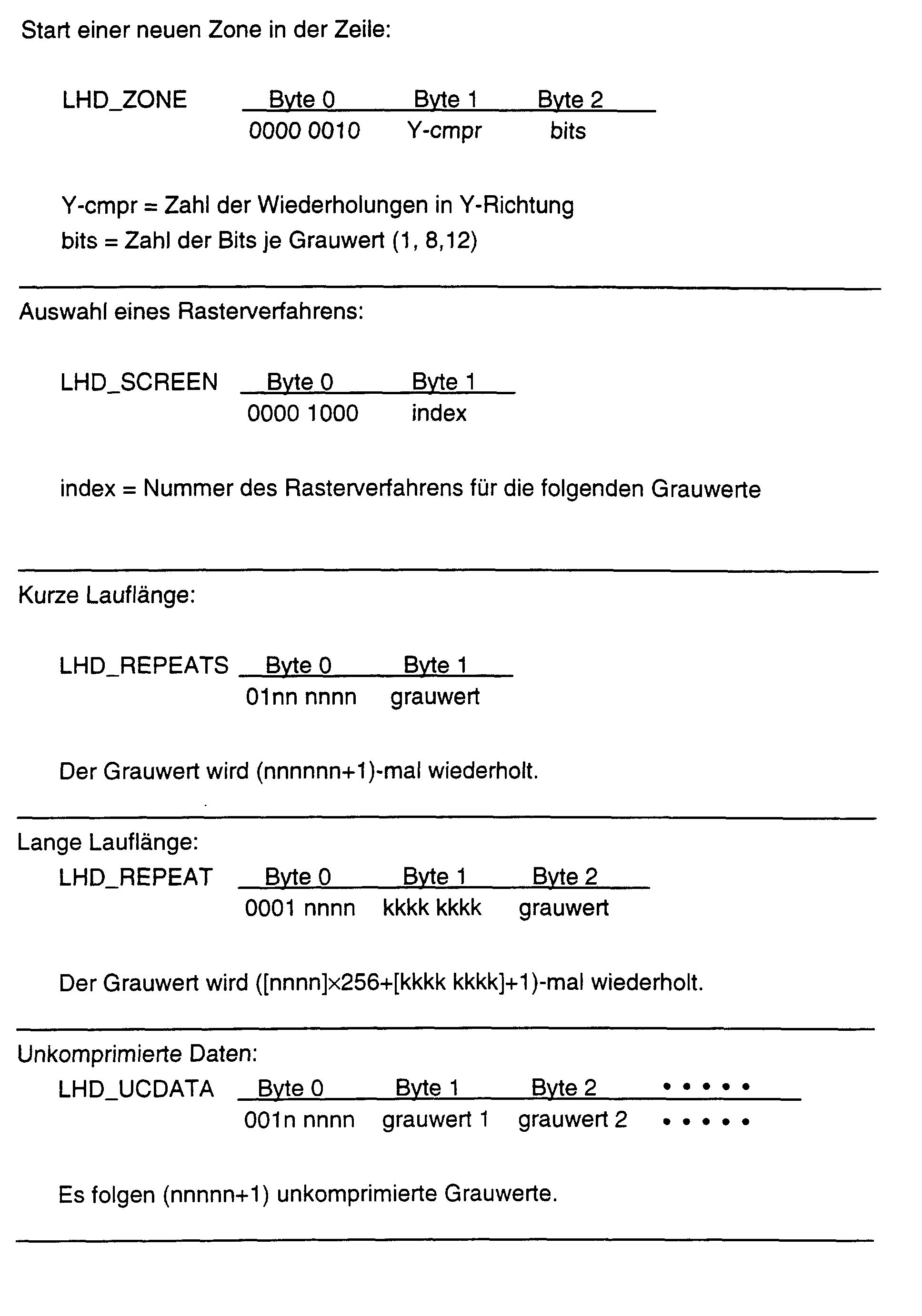

Das erste Byte bzw. die ersten Bits im ersten Byte jedes Kommandos sind ein Kennzeichen dafür, um welches Kommando es sich handelt und wieviele Bytes mit Parametern für das Kommando folgen. Dieser Aufbau stellt sicher, daß bei der Decodierung der Delta-Liste jedes Kommando eindeutig erkannt und richtig interpretiert werden kann.

Jedes neue Band wird mit dem Kommando LHD_BAND und jede neue Zeile innerhalb des Bandes mit dem Kommando LHD_START eingeleitet. Am Anfang jeder Zone in der Zeile steht das Kommando LHD_ZONE, in dem mit dem Parameter "Y-cmpr" codiert ist, über wieviele Zeilen sich der Inhalt dieser Zone in Y-Richtung wiederholt. Der Parameter "bits" gibt an, mit wieviel Bits die Grauwerte innerhalb der Zone codiert sind, z.B. 1 Bit für Schwarz/Weiß-Information, 8 Bit für Contone-Information mit normaler Stufung (256 Stufen) und 12 Bit für Contone-Information mit feinerer Stufung (4096 Stufen).

Mit dem Kommando LHD_SCREEN wird ein Rasterverfahren ausgewählt, das durch den Parameter "index" gekennzeichnet ist. Mit dem ausgewählten Rasterverfahren soll der Rastergenerator alle folgenden Grauwerte in der Delta-Liste rastern, bis wieder ein neues Rasterverfahren ausgewählt wird. Die Parameter der Rasterverfahren wie Rasterweite, Rasterwinkel, Rasterpunktform sind unter der Nummer "index" im Rastergenerator gespeichert, oder sie werden der erzeugten Delta-Liste mit weiteren Delta-Listen Kommandos hinzugefügt.

Eine Lauflänge von sich wiederholenden Grauwerten innerhalb einer Zone wird mit den Kommandos LHD_REPEATS oder LHD_REPEAT beschrieben. Im Kommando LHD_REPEATS codiert eine 6 Bit-Binärzahl [nnnnnn] im ersten Byte eine Lauflänge zwischen 1 und 64, im Kommando LHD_REPEAT wird eine Lauflänge zwischen 1 und 4096 durch eine 12 Bit-Binärzahl codiert ([nnnn] im ersten Byte und [kkkk kkkk] im zweiten Byte). Jeweils das letze Byte dieser Kommandos gibt den Grauwert an, der wiederholt werden soll.

Wenn aufeinanderfolgende Grauwerte in der Zeile nicht gleich sind und deshalb nicht mit einer Lauflänge komprimiert werden können, wird eine solche Sequenz mit dem Kommando LHD_UCDATA beschrieben. Eine 5 Bit-Binärzahl [nnnnn] im ersten Byte gibt an, wieviele unkomprimierte Grauwerte folgen.

Bei der Erzeugung der Delta-Liste werden die Zeilen eines Bandes von oben nach unten abgearbeitet, und die Zonen einer Zeile von links nach rechts. Die erzeugten Kommandos und Lauflängen werden dabei dicht gepackt aneinandergehängt, d.h. für die Zonen, für die keine Lauflängen erzeugt werden, wird nichts in die Delta-Liste eingetragen. Aufgrund des Code für die Komprimierung in Y-Richtung im Kommando LHD_ZONE kann der Rastergenerator die Delta-Liste so decodieren, daß die Lauflängen wieder den richtigen Zonen zugeordnet werden.

### Die Montage von Delta-Listen

Zuvor wurde erläutert, daß einzelne Druckseiten im Delta-Listen Format dem Rastergenerator (5) direkt zugeführt werden können, dort dekomprimiert und gerastert werden und an den Recorder zur Belichtung weitergegeben werden. Sollen aber ganze Druckbögen mit mehreren Druckseiten belichtet werden, so werden nach dem erfindungsgemäßen Verfahren dem Rastergenerator die Delta-Listen aller Druckseiten und aller Hilfselemente (Registermarken usw.) in einem Speicher zur Verfügung gestellt. Zusätzlich ist in dem Speicher eine Datenstruktur abgelegt, die den Druckbogen definiert (Bogendefinition) und für jede Druckseite und jedes Hilfselement eine Datenstruktur, die die Druckseite bzw. das Hilfselement definiert (Deltadefinition). Die Bogendefinition enthält alle für die Aufzeichnung des Druckbogens notwendigen Informationen, wie
- Abmessungen des Bogens
- Position auf der Belichtungsfläche des Recorders
- Auflösung des RIP
- Auflösung des Recorders
- Positiv/Negativ-Beiichtung
- Kennzeichnung des Aufzeichnungsmaterials
- Informationen zum Stanzen von Paßlöchern
- Kennung zur Identifizierung des Druckbogens.

Die Deltadefinitionen der Druckseiten bzw. Hilfselemente enthalten Informationen wie
- Abmessungen der Druckseite bzw. des Hilfselements
- Position auf dem Druckbogen
- Verweis auf die Kennung des zugehörigen Druckbogens
- Verweis auf die zugehörige Delta-Liste
- Kennung zur Identifizierung der Deltadefinition.

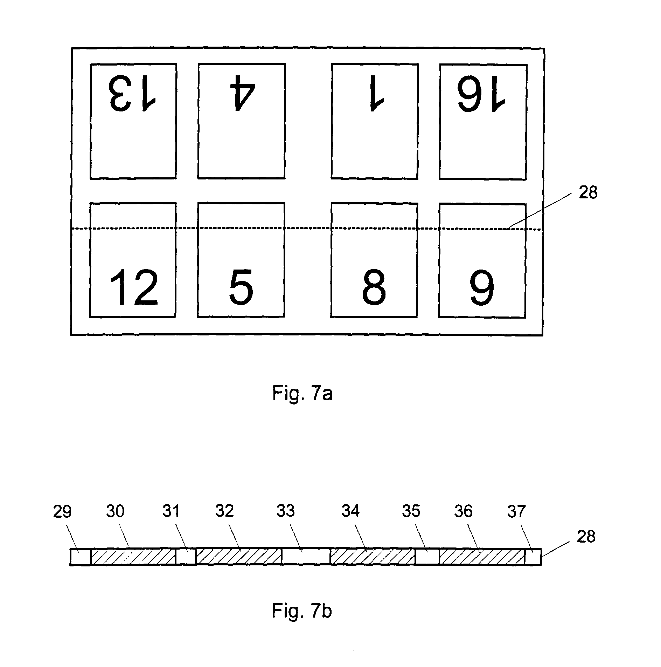

Der Ablauf der Montage im Rastergenerator (5) während der Rasterung und Belichtung wird nun am Beispiel eines vereinfachten Ausschießschemas (ohne Hilfselemente) erläutert, wie es in Fig. 7a dargestellt ist. Der Rastergenerator montiert den Druckbogen Zeile für Zeile und rastert und belichtet dann gleich jede montierte Zeile. Für eine zu belichtende Zeile (28) wird aus den Angaben in der Bogendefinition und in den Deltadefinitionen ermittelt, welche Druckseiten und Hilfselemente zum Aufbau der Zeile beitragen. Für die Zeile (28) sind dies die Druckseiten 12, 5, 8, 9. Aus den Positionsangaben in den Deltadefinitionen wird ebenfalls ermittelt, welche Zeilenstücke aus den zugehörigen Delta-Listen in die zu montierende Zeile eingesetzt werden müssen. Die entsprechenden Ausschnitte werden aus den Delta-Listen geholt, dekomprimiert und in die aktuelle Zeile (28) eingefügt. Fig. 7b zeigt noch einmal den Aufbau der Zeile (28). Vom linken Rand bis zum Beginn des Zeilenstücks (30) aus der Druckseite 12 wird ein weißer (d.h. nicht zu belichtender) Zeilenabschnitt (29) eingefügt. Aus den Delta-Listen der übrigen Seiten 5, 8, 9 werden die Zeilenstücke (32, 34, 36) entsprechend ihrer Position in der Zeile (28) eingefügt und die Zwischenräume mit den weißen Abschnitten (31, 33, 35, 37) aufgefüllt. Anschließend wird die montierte Zeile (28) gerastert und zur Belichtung an den Recorder weitergegeben. Daraufhin wird die nächste Zeile montiert usw.

Auf diese Weise wird die elektronische Montage von Druckbögen während der Rasterung und Belichtung durchgeführt. Dadurch ist es nicht erforderlich, den montierten ganzen Bogen vor der Rasterung und Belichtung zwischenzuspeichern. Durch die Montage ausgehend von komprimierten Delta-Listen ist der Speicherbedarf zusätzlich begrenzt. Durch die Verwendung von Delta-Listen statt PostScript-Daten zur Montage werden auch alle genannten Probleme bei der Interpretation von sehr großen und komplexen PostScript-Files vermieden.

## Patentansprüche

1. Verfahren zur elektronischen Montage von Druckbögen, bei dem einzelne Druckseiten zu einem Druckbogen montiert werden, **dadurch gekennzeichnet,** daß
- die Inhalte der zu montierenden Druckseiten in einer Seitenbeschreibungssprache beschrieben werden,
- durch Interpretation der Seitenbeschreibungen in mindestens einem Interpreter Contone-Maps für die einzelnen Druckseiten erzeugt werden, in denen die Druckseiten pixel- und zeilenweise in Form von Grauwerten beschrieben sind,
- die Contone-Maps der einzelnen Druckseiten in einem Rastergenerator zu einer Gesamt-Contone-Map des Druckbogens montiert werden, indem die Zeilen der Gesamt-Contone-Map des Druckbogens unter Berücksichtigung vorgegebener Parameter aus den einzelnen Zeilen der Contone-Maps der Druckseiten zusammengesetzt werden,
- die Gesamt-Contone-Map des Druckbogens in dem Rastergenerator in eine gerasterte Bit-Map umgewandelt wird und
- der Druckbogen anhand der Bit-Map pixel- und zeilenweise auf einem Aufzeichnungsmaterial aufgezeichnet wird.

2. Verfahren nach Anspruch 1, **dadurch gekennzeichnet,** daß
- die im Rastergenerator vorgegebenen Parameter eine Definition des Druckbogens und für jede zu montierende Druckseite eine Definition der Contone-Map sind,
- die Definition des Druckbogens eine Druckbogen-Kennung und zur Montage des Druckbogens erforderliche Informationen enthält und
- die Definition einer Contone-Map eine entsprechende Contone-Map-Kennung und weitere Informationen zur Montage enthält.

3. Verfahren nach Anspruch 1 oder 2, **dadurch gekennzeichnet,** daß zur Aufzeichnung von Farbauszügen in dem Rastergenerator eine der Anzahl der Farbauszüge entsprechende Anzahl von Druckbogen-Definitionen vorgegeben werden.

4. Verfahren nach einem der Ansprüche 1 bis 3, **dadurch gekennzeichnet,** daß die Gesamt-Contone-Map des Druckbogens nicht zwischengespeichert wird.

5. Verfahren nach einem der Ansprüche 1 bis 4, **dadurch gekennzeichnet,** daß Contone-Maps von Hilfselementen wie Registermarken, Falzmarken, Schneidmarken, Druckkontrollstreifen zusammen mit den Contone-Maps der Druckseiten zu der Gesamt-Contone-Map des Druckbogens montiert werden.

6. Verfahren nach einem der Ansprüche 1 bis 5, **dadurch gekennzeichnet,** daß zur Erzeugung der Contone-Map einer Druckseite
- die programmierte Seitenbeschreibung des Inhaltes der Druckseite, bestehend aus Text-, Zeichnungs- und Bildinformation, durch einen Interpreter verarbeitet und eine Liste von graphischen Objekten erzeugt wird,
- die Objekte gemäß ihrer Position auf der Druckseite überlagert werden,
- für die Objekte Pixel erzeugt werden und
- die Pixel zu der Contone-Map zusammengefaßt werden.

7. Verfahren nach einem der Ansprüche 1 bis 6, **dadurch gekennzeichnet,** daß die Contone-Map nach einer Runlength-Codierung datenkomprimiert ist.

8. Verfahren nach einem der Ansprüche 1 bis 7, **dadurch gekennzeichnet,** daß die Contone-Map durch Reduzierung der Zahl der Bits je Grauwert datenkomprimiert wird.

9. Verfahren nach einem der Ansprüche 1 bis 8, **dadurch gekennzeichnet,** daß die Contone-Map durch Differenz-Codierung zwischen den Grauwerten benachbarter Pixel datenkomprimiert wird.

## Claims

1. Process for the electronic assembly of printed sheets, in which individual printed pages are assembled into a printed sheet, characterized in that
- the contents of the printed pages to be assembled are described in a page describing language,
- by interpretation of the page descriptions in at least one interpreter, Contone maps are generated for the individual printed pages, in which the printed pages are described by means of pixels and lines in the form of gray scale values,
- the Contone maps of the individual printed pages are assembled in a raster generator into an overall Contone map of the printed sheet, in that the lines of the overall Contone map of the printed sheet are composed from the individual lines of the Contone maps of the printed pages, observing pre-set parameters,
- the overall Contone map of the printed sheet is converted in the raster generator into a raster bit map and
- the printed sheet is recorded using the bit map by means of pixels and lines on a recording material.

2. Process according to Claim 1, characterized in that
- the parameters pre-set in the raster generator are a definition of the printed sheet and a definition of the Contone map for each printed page to be assembled,
- the definition of the printed sheet contains a printed sheet identifier and information necessary for assembling the printed sheet and
- the definition of a Contone map contains a corresponding Contone map identifier and further information on assembly.

3. Process according to Claim 1 or 2, characterized in that for recording colour extracts in the raster generator a number of printed sheet definitions corresponding to the number of colour extracts is pre-set.

4. Process according to one of Claims 1 to 3, characterized in that the overall Contone map of the printed sheet is not intermediately stored.

5. Process according to one of Claims 1 to 4, characterized in that the Contone maps of auxiliary elements such as register marks, fold marks, cutting marks and print control strips are assembled together with the Contone maps of the printed pages into the overall Contone map of the printed sheet.

6. Process according to one of Claims 1 to 5, characterized in that for generating the Contone map of a printed page
- the programmed page description of the contents of the printed page, consisting of text, drawing and picture information is processed by an interpreter and a list of graphic objects is generated,
- the objects are superimposed according to their position on the printed page,
- pixels are generated for the objects and
- the pixels are combined into the Contone map.

7. Process according to one of Claims 1 to 6, characterized in that the Contone map is data-compressed according to a runlength coding.

8. Process according to one of Claims 1 to 7, characterized in that the Contone map is data-compressed by reducing the number of bits per gray scale value.

9. Process according to one of Claims 1 to 8, characterized in that the Contone map is data-compressed by means of differential coding between the gray scale values of adjacent pixels.

## Revendications

1. Procédé de montage électronique de feuilles d'impression, selon lequel les pages d'impression sont montées sous la forme d'une feuille,
caractérisé en ce qu'
on décrit le contenu des pages d'impression à monter dans un langage de description de page
- par interprétation on génère les descriptions de page dans au moins une carte Interpreter Contone pour les différentes pages d'impression, en décrivant les pages d'impression pixel par pixel et ligne par ligne sous la forme de niveaux de gris,
- on monte les cartes Contone des différentes pages d'impression dans un générateur de trame, sous la forme d'une carte globale Contone de la feuille d'impression, en regroupant les lignes de la carte Contone globale de la feuille d'impression en tenant compte de paramètres prédéterminés à partir des différentes lignes des cartes Contone des pages d'impression,
- on convertit la carte Contone globale de la feuille d'impression, dans le générateur de trame, en une carte dite « bit-map » tramée, et
- on enregistre les feuilles d'impression à partir de la carte bit-map, pixel par pixel et ligne par ligne sur un support d'enregistrement.

2. Procédé selon la revendication 1,
caractérisé en ce que
les paramètres prédéterminés dans le générateur de trame sont une définition de la feuille d'impression et, pour chaque feuille d'impression à monter, une définition de la carte Contone,
- la définition de la feuille d'impression contient une référence de la feuille d'impression et les informations nécessaires au montage de la feuille d'impression, et
- la définition d'une carte Contone contient une référence correspondante de la carte Contone ainsi que d'autres informations de montage.

3. Procédé selon la revendication 1 ou 2,
caractérisé en ce que
pour inscrire des extraits de couleurs dans le générateur de trame, on a prédéfini un nombre d'extraits de couleurs correspondant au nombre des définitions de feuilles d'impression.

4. Procédé selon l'une quelconque des revendications 1 à 3,
caractérisé en ce qu'
on ne mémorise pas de manière intermédiaire la carte Contone globale de la feuille d'impression.

5. Procédé selon l'une quelconque des revendications 1 à 4,
caractérisé en ce qu'
on monte les cartes Contone d'éléments auxiliaires tels que des repères de concordance, des repères de plis, des repères de massicotage, des bandes de contrôle d'impression avec les cartes Contone des faces d'impression pour obtenir une carte Contone globale de la feuille d'impression.

6. Procédé selon l'une quelconque des revendications 1 à 5,
caractérisé en ce que
pour générer la carte Contone d'une page d'impression
- on crée la description selon le programme du contenu de la page d'impression composé d'informations de textes, de dessins et d'images, par un traitement par Interpreter, et on génère une liste d'objets graphiques,
- on combine les objets selon leur position sur la page d'impression,
- on génère des pixels pour les objets et
- on regroupe les pixels suivant une carte Contone.

7. Procédé selon l'une quelconque des revendications 1 à 6,
caractérisé en ce qu'
on comprime les données de la carte Contone selon le codage de longueur de marche.

8. Procédé selon l'une quelconque des revendications 1 à 7,
caractérisé en ce qu'
on comprime les données de la carte Contone par réduction du nombre de bits par niveau de gris.

9. Procédé selon l'une quelconque des revendications 1 à 8,
caractérisé en ce qu'
on comprime les données de la carte Contone par un codage de différence entre les niveaux de gris de pixels voisins.
